(19) Europäisches Patentamt
European Patent Office
Office européen des brevets

(11) **EP 4 815 066 A1**

# (12) EUROPEAN PATENT APPLICATION

published in accordance with Art. 153(4) EPC

(43) Date of publication:
**30.09.2026 Bulletin 2026/40**

(21) Application number: **24895412.5**

(22) Date of filing: **10.05.2024**

(51) International Patent Classification (IPC):
***H01M 4/66*** *(2006.01)* ***H01M 10/00*** *(2006.01)*

(52) Cooperative Patent Classification (CPC):
**H01M 4/02; H01M 4/13; H01M 4/66; H01M 4/70; H01M 10/00; H01M 10/04; H01M 10/0525;** Y02E 60/10

(86) International application number:
**PCT/CN2024/092434**

(87) International publication number:
**WO 2025/112301 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.11.2023 CN 202311621386**

(71) Applicant: **Contemporary Amperex Technology Co., Limited**
**Ningde, Fujian 352100 (CN)**

(72) Inventors:
- **LI, Mingling**
  **Ningde, Fujian 352100 (CN)**
- **LIU, Xin**
  **Ningde, Fujian 352100 (CN)**
- **HUANG, Qisen**
  **Ningde, Fujian 352100 (CN)**
- **CAI, Qiguo**
  **Ningde, Fujian 352100 (CN)**
- **LIU, Xianghui**
  **Ningde, Fujian 352100 (CN)**
- **LI, Cheng**
  **Ningde, Fujian 352100 (CN)**

(74) Representative: **Gong, Jinping**
**CocreateIP**
**Neumarkter Straße 21**
**81673 München (DE)**

## (54) COMPOSITE CURRENT COLLECTOR, POLE PIECE, SECONDARY BATTERY AND ELECTRICAL APPARATUS

(57) A composite current collector, a pole piece, a secondary battery and an electrical apparatus. The composite current collector comprises a supporting layer, and a bonding layer and a conductive layer which are sequentially stacked on at least one side surface of the supporting layer. The conductive layer comprises a conductive layer main body and first protruding parts. The first protruding parts protrude in the thickness direction of the conductive layer and are embedded into the bonding layer.

131
132
12
11
13

FIG. 1



Processed by Luminess, 75001 PARIS (FR)

## Description

### CROSS-REFERENCE TO RELATED APPLICATIONS

The present application claims priority to Chinese Patent Application No. 202311621386.3, filed on November 28, 2023 and entitled "COMPOSITE CURRENT COLLECTOR, ELECTRODE PLATE, SECONDARY BATTERY, AND POWER CONSUMING APPARATUS", which is incorporated herein by reference in its entirety.

### TECHNICAL FIELD

The present application relates to the field of battery technologies, and in particular, to a composite current collector, an electrode plate, a secondary battery, and a power consuming apparatus.

### BACKGROUND

The statement herein only provides background information related to the present application and does not necessarily constitute the prior art.

In recent years, as secondary batteries represented by lithium-ion batteries are increasingly widely used, secondary batteries have been widely used in energy storage power systems such as hydroelectric power plants, thermal power plants, wind power plants, and solar power plants, and various fields such as electric tools, electric bicycles, electric motorcycles, electric vehicles, military equipment, and aerospace. Due to the great development of secondary batteries, higher requirements have been put forward for their performance such as energy density, cycling performance, and safety performance. In a secondary battery, a current collector is used as a component for carrying an active substance, and has a great impact on the battery's electrochemical performance. However, a currently commonly used composite current collector usually has a problem of a poor binding force between layers. As a result, problems such as plunging cell performance and poor cycle performance are easily caused after the composite current collector is applied to a battery. In addition, the elastic modulus of the composite current collector is relatively low, leading to relatively low machinability of the composite current collector.

### SUMMARY

The present application provides a composite current collector, an electrode plate, a secondary battery, and a power consuming apparatus, which can improve binding performance and machinability of the composite current collector, thereby improving the cycle performance of the secondary battery.

To achieve the foregoing objective, a first aspect of the present application provides a composite current collector, including: a support layer, and a binding layer and a conductive layer that are sequentially stacked on at least one side surface of the support layer, where the conductive layer includes a conductive layer body and a first protrusion portion, and the first protrusion portion protrudes in a thickness direction of the conductive layer and is embedded in the binding layer.

In some implementations of the present application, a plurality of first protrusion portions is provided, and the plurality of first protrusion portions is disposed at intervals.

In some implementations of the present application, a protrusion height of the first protrusion portion is less than a thickness of the binding layer.

In some implementations of the present application, the first protrusion portion includes a first sub-protrusion portion and/or a second sub-protrusion portion, a shape of an orthographic projection of the first sub-protrusion portion on a surface of the conductive layer includes a hole shape, and a shape of an orthographic projection of the second sub-protrusion portion on the surface of the conductive layer includes a stripe shape;

optionally, the hole shape includes one or more of a circular hole, an elliptic hole, a sectoral hole, an arch-shaped hole, and a polygonal hole, and is optionally a circular hole and/or an elliptic hole;

optionally, the stripe shape includes one or more of an elliptic stripe, a polygonal stripe, an arc-shaped stripe, and a wavy stripe, and is optionally an elliptic stripe.

In some implementations of the present application, an angle included in the shape of the orthographic projection of the first sub-protrusion portion on the surface of the conductive layer and a supplementary angle of the angle ≥ 45°.

In some implementations of the present application, the first sub-protrusion portion satisfies at least one of the following conditions:

(1) a protrusion height h1 of the first sub-protrusion portion ranges from 15% to 85% of the thickness of the binding

layer;
(2) the width d1 of the first sub-protrusion portion ranges from 5 millimeters (mm) to 50 mm; and
(3) the spacing Δx1 between two adjacent first sub-protrusion portions ranges from 10 mm to 100 mm.

In some implementations of the present application, the stripe shape includes alternating stripes or intersecting stripes, optionally, are intersecting stripes, and further optionally, are grid-shaped intersecting stripes.
In some implementations of the present application, the intersecting stripes include at least one intersecting portion;

optionally, a shape of an orthographic projection of the intersecting portion on the surface of the conductive layer includes one or more of a circle, an ellipse, and a polygon, and is optionally a circle and/or an ellipse;
optionally, an angle included in the shape of the orthographic projection of the intersecting portion on the surface of the conductive layer and a supplementary angle of the angle ≥ 45°.

In some implementations of the present application, the second sub-protrusion portion satisfies at least one of the following conditions:

(1) a protrusion height h2 of the second sub-protrusion portion ranges from 15% to 85% of the thickness of the binding layer;
(2) a width d2 of the second sub-protrusion portion ranges from 5 mm to 40 mm; and
(3) the spacing Δx2 between two adjacent second sub-protrusion portions ranges from 20 mm to 150 mm.

In some implementations of the present application, a total area S1 of the orthographic projection of the first protrusion portion on the surface of the conductive layer and an area S of the surface of the conductive layer satisfy: 1%≤S1/S≤50%.
In some implementations of the present application, the binding layer includes a binding layer body and a second protrusion portion, and the second protrusion portion protrudes in a thickness direction of the binding layer and is embedded in the conductive layer.
In some implementations of the present application, a protrusion height of the second protrusion portion is equal to a thickness of the conductive layer.
In some implementations of the present application, a plurality of second protrusion portions is provided, and the plurality of second protrusion portions is disposed at intervals;
optionally, a spacing Δx3 between two adjacent second protrusion portions ranges from 5 mm to 100 mm.
In some implementations of the present application, the second protrusion portions and the first protrusion portions are disposed at intervals; and/or
at least one first protrusion portion is disposed between two adjacent second protrusion portions.
In some implementations of the present application, a total area S2 of an orthographic projection of the second protrusion portion on the surface of the conductive layer and a total area S1 of an orthographic projection of the first protrusion portion on the surface of the conductive layer satisfy: S2<S1.
In some implementations of the present application, a width d3 of the second protrusion portion ranges from 50 micrometers (μm) to 500 μm.
In some implementations of the present application, a shape of the orthographic projection of the second protrusion portion on the surface of the conductive layer includes one or more of a circular hole, an elliptic hole, a sectoral hole, an arch-shaped hole, and a polygonal hole, and is optionally a circular hole and/or an elliptic hole;
optionally, an angle included in the shape of the orthographic projection of the second protrusion portion on the surface of the conductive layer ≥ 45°.
In some implementations of the present application, a total area S2 of the orthographic projection of the second protrusion portion on the surface of the conductive layer and an area S of the surface of the conductive layer satisfy: 0.001%≤S2/S≤0.8%.
In some implementations of the present application, the second protrusion portion includes a binder;

optionally, the binder includes one or more of a composition of isocyanate containing a multifunctional group and a polyester polyol compound, polyurethane, an epoxy resin, polyacrylate, poly(vinyl acetate), unsaturated polyester, a phenolic resin, a urea-formaldehyde resin, a modified polyolefin resin, modified polyethylene, modified polypropylene, modified polyolefin, a silicone resin, an ethylene-acrylic acid copolymer, an ethylene-vinyl acetate copolymer, an ethylene-vinyl alcohol copolymer, an acrylate resin, polycarbonate, and polyamide;
further optionally, the polyurethane includes one or more of thermoplastic polyurethane and reactive polyurethane.

In some implementations of the present application, at least one of the following conditions is satisfied:

(1) a thickness of the binding layer body ranges from 0.5 μm to 3 μm; and
(2) a binding force of the conductive layer ≥ 230 newton/meter (N/m).

In some implementations of the present application, at least one of the following conditions is satisfied:

(1) a thickness of the conductive layer body ranges from 0.5 μm to 5 μm; and
(2) a thickness of the support layer ranges from 2 μm to 15 μm.

In some implementations of the present application, at least one of the following conditions is satisfied:

(1) the support layer includes one or more of polyamide, polyimide, polyethylene terephthalate, polybutylene terephthalate, polyethylene naphthalate, polycarbonate, polyethylene, polypropylene, poly(propyl vinyl), an acrylonitrile-butadiene-styrene copolymer, vinyl alcohol, polystyrene, polyvinyl chloride, polyvinylidene difluoride, polytetrafluoroethylene, sodium polystyrene sulfonate, polyacetylene, silicone rubber, polyformaldehyde, polyphenylene ether, polyphenylene sulfide, polyethylene glycol, a poly(sulfur nitride) polymer material, polyphenyl, polypyrrole, polyaniline, polythiophene, polypyridine, cellulose, starch, protein, an epoxy resin, a phenolic resin, a derivative thereof, a cross-linked substance thereof, and a copolymer thereof;
(2) the binding layer includes one or more of a composition of isocyanate containing a multifunctional group and a polyester polyol compound, polyurethane, an epoxy resin, polyacrylate, poly(vinyl acetate), unsaturated polyester, a phenolic resin, a urea-formaldehyde resin, a modified polyolefin resin, modified polyethylene, modified polypropylene, modified polyolefin, a silicone resin, an ethylene-acrylic acid copolymer, an ethylene-vinyl acetate copolymer, an ethylene-vinyl alcohol copolymer, an acrylate resin, polycarbonate, and polyamide; and
further optionally, the polyurethane includes one or more of thermoplastic polyurethane and reactive polyurethane; and
(3) the conductive layer includes one or more of copper, aluminum, nickel, titanium, platinum, iron, cobalt, chrome, tungsten, molybdenum, magnesium, lead, indium, and tin.

A second aspect of the present application further provides an electrode plate, including the composite current collector in the first aspect of the present application.

A third aspect of the present application further provides a secondary battery, including the electrode plate in the second aspect of the present application.

A fourth aspect of the present application provides a power consuming apparatus, including the secondary battery according to the third aspect of the present application.

The power consuming apparatus in the present application includes the secondary battery provided in the present application, and therefore has at least the same advantages as the secondary battery.

Details of one or more examples of the present application are provided in the accompanying drawings and descriptions below. Other features, objects, and advantages of the present application will become apparent from the specification, the drawings, and the claims.

The composite current collector provided in the present application is provided with the first protrusion portion on the conductive layer, so that the surface area of contact between the conductive layer and the binding layer can be increased, and binding of the binding layer to the conductive layer can be enhanced, thereby improving the binding force between the binding layer and the conductive layer, effectively reducing shedding of the conductive layer, and further improving the cycle performance of a cell using the composite current collector.

## BRIEF DESCRIPTION OF THE DRAWINGS

To describe the technical solutions in examples of the present application more clearly, the following briefly describes the accompanying drawings required for the examples of the present application. Apparently, the accompanying drawings in the following description show merely some examples of the present application, and a person of ordinary skill in the art may still derive other accompanying drawings from the accompanying drawings without creative efforts. In the accompanying drawings:

FIG. 1 is a schematic cross-sectional structural diagram of a composite current collector according to an implementation of the present application.
FIG. 2 is a schematic cross-sectional structural diagram of a composite current collector according to an implementation of the present application.

FIG. 3 is a schematic cross-sectional structural diagram of a composite current collector according to an implementation of the present application.

FIG. 4 is a schematic top structural diagram of a composite current collector according to an implementation of the present application.

FIG. 5 is a schematic top structural diagram of a composite current collector according to an implementation of the present application.

FIG. 6 is a schematic top structural diagram of a composite current collector according to an implementation of the present application.

FIG. 7 is a schematic top structural diagram of a composite current collector according to an implementation of the present application.

FIG. 8 is a schematic cross-sectional structural diagram of a composite current collector according to an implementation of the present application.

FIG. 9 is a schematic cross-sectional structural diagram of a composite current collector according to an implementation of the present application.

FIG. 10 is a schematic diagram of a battery cell according to an implementation of the present application.

FIG. 11 is an exploded view of a battery cell according to an implementation of the present application shown in FIG. 10.

FIG. 12 is a schematic diagram of a battery module according to an implementation of the present application;

FIG. 13 is a schematic diagram of a battery pack according to an implementation of the present application;

FIG. 14 is an exploded view of a battery pack according to an implementation of the present application shown in FIG. 13;

FIG. 15 is a schematic view of a power consuming apparatus in which a secondary battery serves as a power source according to an example of the present application.

Descriptions of reference numerals: 1: battery pack; 2: upper box; 3: lower box; 4: battery module; 5: battery cell; 51: case; 52: electrode assembly; 53: cover plate; 6: power consuming apparatus; 11: support layer; 12: binding layer; 121: binding layer body; 122: second protrusion portion; 13: conductive layer; 131: conductive layer body; 132: first protrusion portion; 1321: first sub-protrusion portion; and 1322: second sub-protrusion portion.

## DETAILED DESCRIPTION

Hereinafter, some implementations of a composite current collector, an electrode plate, a secondary battery, and a power consuming apparatus of the present application are described in detail with reference to the accompanying drawings as appropriate. However, there will be cases where unnecessary detailed descriptions are omitted. For example, there are cases in which detailed explanations of well-known matters and repeated explanations of actually the same structure are omitted. This is to prevent the following description from becoming unnecessarily lengthy and to facilitate the understanding of those skilled in the art. In addition, the accompanying drawings and subsequent descriptions are provided for those skilled in the art to fully understand the present application, and are not intended to limit the subject matter recited in the claims.

A "range" disclosed in the present application may be defined in a form of a lower limit and an upper limit. A given range is defined by selecting a lower limit and an upper limit, and the selected lower limit and upper limit define boundaries of a particular range. A range defined in this manner may be inclusive or exclusive of the end values, and any end value may be independently inclusive or exclusive and may be arbitrarily combined, that is, any lower limit may be combined with any upper limit to form a range. For example, if ranges of 60 to 120 and 80 to 110 are listed for specific parameters, it is also expected to be understood as ranges of 60 to 110 and 80 to 120. In addition, if the minimum range values 1 and 2 are listed, and if the maximum range values 3, 4, and 5 are further listed, the following ranges can all be expected: 1 to 3, 1 to 4, 1 to 5, 2 to 3, 2 to 4, and 2 to 5. In the present application, unless otherwise specified, the value range "a to b" represents an abbreviated representation of any combination of real numbers between a and b, where a and b are both real numbers. For example, the value range "0 to 5" indicates that all real numbers between "0 to 5" have been listed in this article, and "0 to 5" is only a shortened representation of these value combinations. In addition, when a parameter is expressed as an integer greater than or equal to 2, it is equivalent to listing that the parameter is an integer such as 2, 3, 4, 5, 6, 7, 8, 9, 10, 11, 12, or the like. For example, when a parameter is expressed as an integer selected from "2 to 10", it is equivalent to lists integers 2, 3, 4, 5, 6, 7, 8, 9, and 10.

The terms "plurality", "multiple", and the like in the present application mean greater than 2 or equal to 2 in number, unless otherwise limited. For example, "one or more" means one or more than or equal to two.

Unless otherwise specified, all the implementations and optional implementations of the present application can be combined with each other form new technical solutions.

"Example" mentioned herein means that particular features, structures, or characteristics described with

reference to the example may be included in at least one example or implementation of the present application. The term appearing at different positions of the specification may not necessarily refer to the same example or an independent or alternative example that is mutually exclusive with another example. A person skilled in the art explicitly or implicitly understands that the examples described in the specification may be combined with other examples. An "implementation" mentioned in this specification has a similar understanding.

A person skilled in the art may understand that, in a method in implementations or examples, a writing order of the steps does not imply a strict order of execution and does not impose any limitation on an implementation process, and a detailed execution order of the steps should be determined according to functions and possible internal logic of the steps. If there is no special explanation, all steps of the present application may be performed sequentially or randomly, and preferably sequentially. For example, the method including steps (a) and (b) indicates that the method may include steps (a) and (b) performed sequentially, or the method may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

In the present application, in an open technical feature or technical solution described by using words such as "contain", "include", and "comprise", unless otherwise specified, not excluding additional members other than the listed members may be considered as providing a closed feature or solution consisting of the listed members, and further providing an open feature or solution including additional members other than the listed members, if no other descriptions are provided. For example, A includes a1, a2, and a3, and may further include other members, or may not include additional members, unless otherwise specified, which may be considered as providing a feature or solution "A consists of a1, a2, and a3", and further providing a feature or solution "A not only includes a1, a2, and a3, but also includes other members". In the present application, unless otherwise specified, A (such as B) indicates that B is a non-limiting example of A. It can be understood that A is not limited to B.

In the present application, "optionally", "optional", or "option", refers to presence or absence, that is, being selected from any one of two parallel solutions: "presence" or "absence". If there are multiple "optional" in one technical solution, unless otherwise specified and there are no contradictions or mutual constraints, each "optional" is independent.

Currently, by compounding a metal as a conductive layer and a polymer material layer, a conventional composite current collector having a "metal/polymer material/metal" sandwich structure can be formed. When the composite current collector is applied to a battery, the energy density of the battery can be improved, the costs can be reduced, and the battery can be lightweight. In a process of preparing such a composite current collector, a binder usually needs to be introduced to bind the conductive layer and the polymer material layer, and form a binder layer. However, in the composite current collector, the layer-to-layer binding performance is relatively low. Consequently, during machining of the cell, and during cyclic use of the cell, a problem that shedding of the conductive layer in the composite current collector causes plunging of cell performance occurs easily. In addition, because the elastic modulus of the binder layer is relatively low, the entire elastic modulus of the composite current collector is relatively low. In this way, a problem such as easy wrinkling of the composite current collector during machining, and consequently the mechanical performance of the composite current collector cannot satisfy machining requirements.

To resolve the foregoing technical problem, the present application provides a composite current collector. A protrusion portion is disposed on a surface of the conductive layer adjacent to the binding layer, so that the surface area of contact between the conductive layer and the binding layer can be increased, thereby improving the binding force between the binding layer and the conductive layer, and further improving the cycle performance of a cell using the composite current collector. In addition, the protrusion portion is embedded in the binding layer, and may further play a role in supporting the binding layer, so that the elastic modulus of the binding layer is increased, thereby increasing the entire elastic modulus of the composite current collector. The composite current collector is described in more detail below.

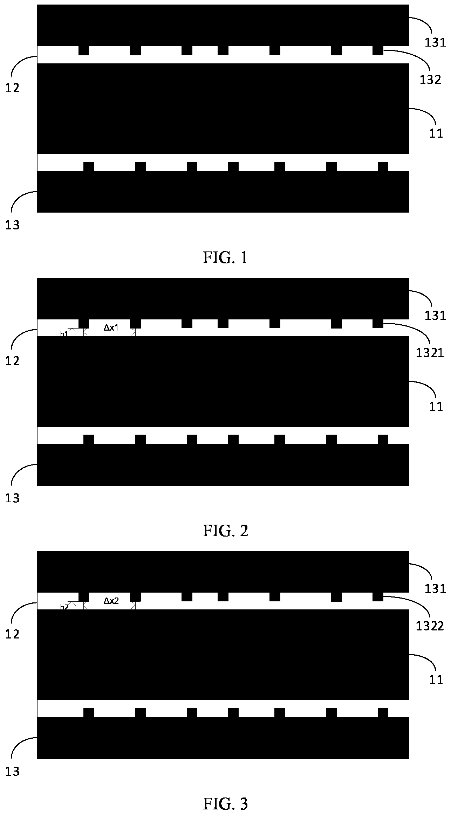

According to a first aspect, the present application provides a composite current collector. Referring to FIG. 1, the composite current collector includes a support 11 and a binding layer 12 and a conductive layer 13 that are sequentially stacked on at least one side surface of the support layer 11, where the conductive layer 13 includes a conductive layer body 131 and a first protrusion portion 132, and the first protrusion portion 132 protrudes in a thickness direction of the conductive layer 13 and is embedded in the binding layer 12.

It may be understood that the first protrusion portion protrudes in the thickness direction of the conductive layer to a direction close to the binding layer.

It should be noted that, in the present application, "a conductive layer surface" or "a surface of a conductive layer" refers to a surface of the conductive layer perpendicular to a thickness direction of the current collector, that is, a surface of the conductive layer adjacent to (or in contact with) the binding layer. The "area of the conductive layer surface" refers to an area of the surface of the conductive layer adjacent to (or in contact with) the binding layer.

The composite current collector provided in the present application is provided with the first protrusion portion on the conductive layer, so that the surface area of contact between the conductive layer and the binding layer can be increased, and binding of the binding layer to the conductive layer can be enhanced, thereby improving the binding force between the binding layer and the conductive layer, effectively reducing shedding of the conductive layer, and further

improving the cycle performance of a cell using the composite current collector. In addition, the increase in the surface area of contact between the binding layer and the conductive layer can further reduce a probability of generating a defect in the conductive layer, and under the same stretching and extension, there are fewer cracks, thereby helping reduce the sheet resistance increase rate. In addition, the first protrusion portion is embedded in the binding layer, and may further play a role in supporting the interior of the binding layer, so that the elastic modulus of the binding layer is increased, thereby increasing the entire elastic modulus and the mechanical performance of the composite current collector, reducing occurrence of a problem such as wrinkling of the composite current collector during machining, and improving the machinability of the composite current collector.

In some implementations, a plurality of first protrusion portions is provided, and the plurality of first protrusion portions is disposed at intervals.

It may be understood that, that the plurality of first protrusion portions is disposed at intervals means that there is an interval (spacing) between any two adjacent first protrusion portions.

The plurality of first protrusion portions can increase wettability of the binder included in the binding layer to the conductive layer, and can increase the surface area of contact between the conductive layer and the adjacent binding layer, thereby further improving the binding force between the binding layer and the conductive layer. In addition, the support for the interior of the binding layer may be further enhanced, so that the elastic modulus of the binding layer and the composite current collector may be further improved. Disposing the plurality of first protrusion portions at intervals can improve the binding force between the binding layer and the conductive layer, and provide sufficient mechanical strength to the conductive layer, the binding layer, and the composite current collector, so that the structural stability of the composite current collector is improved.

In some implementations, a protrusion height of the first protrusion portion is less than a thickness of the binding layer.

That the protrusion height of the first protrusion portion is less than the thickness of the binding layer can improve the binding force between the binding layer and the conductive layer, and provide sufficient mechanical strength to the conductive layer, the binding layer, and the composite current collector.

In some implementations, the first protrusion portion 132 includes a first sub-protrusion portion 1321 and/or a second sub-protrusion portion 1322.

It may be understood that the conductive layer 13 may be provided with only the first sub-protrusion portion 1321 (refer to FIG. 2), only the second sub-protrusion portion 1322 (refer to FIG. 3), or a combination of the first sub-protrusion portion 1321 and the second sub-protrusion portion 1322.

When a combination of the first sub-protrusion portion and the second sub-protrusion portion is disposed, a better effect of improving the binding force can be achieved, and the composite current collector can further have sufficient mechanical strength.

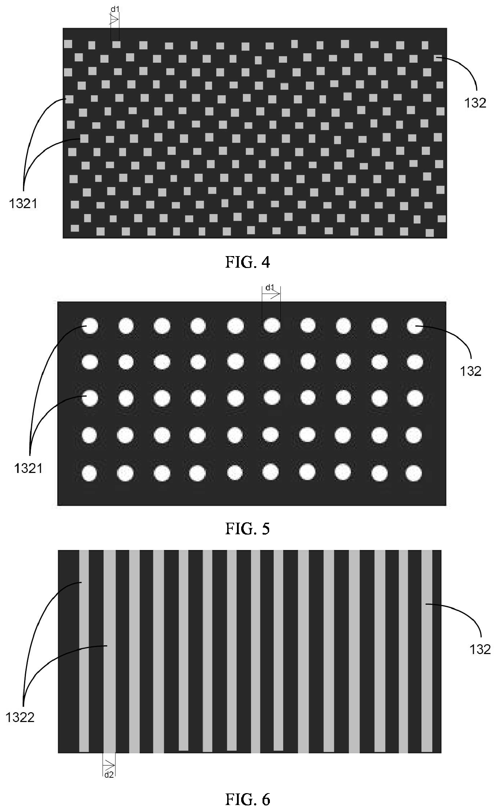

A shape of the orthographic projection of the first sub-protrusion portion 1321 on the surface of the conductive layer includes a hole shape (refer to FIG. 4 and FIG. 5).

In some examples, the hole shape includes, but is not limited to, one or more of a circular hole, an elliptic hole, a sectoral hole, an arch-shaped hole, and a polygonal hole, and is optionally a circular hole and/or an elliptic hole.

It may be understood that, the "hole shape" or "hole" described in the present application means that a shape of each orthographic projection on the surface of the conductive layer is a regular or irregular bounded shape, or a closed planar geometric figure. For example, a "circular hole" refers to that the shape of the orthographic projection is a circle, and a "sectoral hole" refers to that the shape of the orthographic projection is a sector.

It may be understood that the shape of the orthographic projection of the first sub-protrusion portion on the surface of the conductive layer includes a hole shape. In this case, the first sub-protrusion portion has a discrete distribution (or alternating distribution) form, and any two first sub-protrusion portions do not intersect with each other and have an interval between each other.

It may be understood that the "arch shape" in the present application refers to a pattern formed by an arc and a chord faced by the arc.

When the hole shape includes a circular hole and/or an elliptic hole, the first sub-protrusion portion does not include an acute tip. In this case, the binder may wet the entire protrusion more completely, thereby helping improve the binding force of the binding layer to the conductive layer, and reducing shedding of the conductive layer. In addition, the circular hole shape and/or the elliptic shape may provide a support function for the binding layer in 360 degrees, so that the elastic modulus of the binding layer is higher, thereby making the elastic modulus of the composite current collector higher.

In some implementations, an angle included in the shape of the orthographic projection of the first sub-protrusion portion on the surface of the conductive layer and a supplementary angle of the angle $\geq 45°$.

It may be understood that, the angle included in the shape of the orthographic projection of the first sub-protrusion portion on the surface of the conductive layer, that is, an angle included in the hole shape means that when the hole shape is a polygon, each angle of the polygon and a supplementary angle of each angle $\geq 45°$; and when the hole shape is a sector or an arch, a central angle corresponding to the sector or the arch and a supplementary angle of the central angle $\geq 45°$.

That the angle included in the shape of the orthographic projection of the first sub-protrusion portion on the surface of the conductive layer and a supplementary angle of the angle ≥ 45° helps the binder to wet the protrusion more completely, alleviates a problem that the protrusion is not easily wetted by the binder when having a tip, improves a binding force of the binding layer to the conductive layer, and lowers shedding of the conductive layer; and further facilitates improvement of a support function of the protrusion for the binding layer, thereby further improving the elastic modulus of the binding layer and the composite current collector.

In some implementations, a protrusion height h1 (referring to FIG. 2) of the first sub-protrusion portion ranges from 15% to 85% of the thickness of the binding layer. For example, the protrusion height of the first sub-protrusion portion may be 15%, 30%, 45%, 60%, 75%, or 85% of the thickness of the binding layer, or fall within a range formed by any values described above.

It should be noted that the "protrusion height of the first sub-protrusion portion" refers to a distance between the highest point of the top of the first sub-protrusion portion and the surface of the conductive layer provided with the first sub-protrusion portion.

The protrusion height of the first sub-protrusion portion falls within the foregoing range. In one aspect, the binder can better wet the protrusion, thereby further improving the binding performance of the binding layer to the conductive layer, and further improving the binding force between the binding layer and the conductive layer. In the other aspect, the impact on the conductivity of the conductive layer may also be reduced, and a support function on the binding layer is further improved, thereby improving the elastic modulus of the binding layer and the composite current collector.

In some implementations, the width d1 (referring to FIG. 4 and FIG. 5) of the first sub-protrusion portion ranges from 5 mm to 50 mm. For example, the width of the first sub-protrusion portion may be 5 mm, 10 mm, 20 mm, 30 mm, 40 mm, or 50 mm, or fall within a range formed by any values described above.

The width of the first sub-protrusion portion falls within the foregoing range. In one aspect, the binder can better wet the protrusion, thereby further improving the binding performance of the binding layer to the conductive layer, and further improving the binding force between the binding layer and the conductive layer. In the other aspect, the conductivity of the conductive layer is not affected as much as possible.

It should be noted that the "width of the first sub-protrusion portion" refers to a maximum value of a distance between any two points on a contour of a shape of the orthographic projection of the first sub-protrusion portion on the surface of the conductive layer (when the shape of the orthographic projection is a circular hole, an elliptic hole, a sectoral hole, or an arch-shaped hole), or a maximum side length of the contour (when the shape of the orthographic projection is a polygonal hole).

In some implementations, the spacing Δx1 (referring to FIG. 2) between two adjacent first sub-protrusion portions ranges from 10 mm to 100 mm. For example, the spacing between two adjacent first sub-protrusion portions may be 10 mm, 20 mm, 30 mm, 40 mm, 50 mm, 60 mm, 70 mm, 80 mm, 90 mm, or 100 mm, or fall within a range formed by any values described above.

It should be noted that the "spacing between two adjacent first sub-protrusion portions" refers to a horizontal distance between center points of two adjacent first sub-protrusion portions. It may be understood that the "horizontal" herein refers to a direction perpendicular to the thickness of the current collector and parallel to the surface of the conductive layer.

The spacing between two adjacent first sub-protrusion portions falls within the foregoing range. In one aspect, the binder can better wet the protrusion, thereby further improving the binding performance of the binding layer to the conductive layer, and further improving the binding force between the binding layer and the conductive layer. In the other aspect, the impact on the conductivity of the conductive layer may be further reduced.

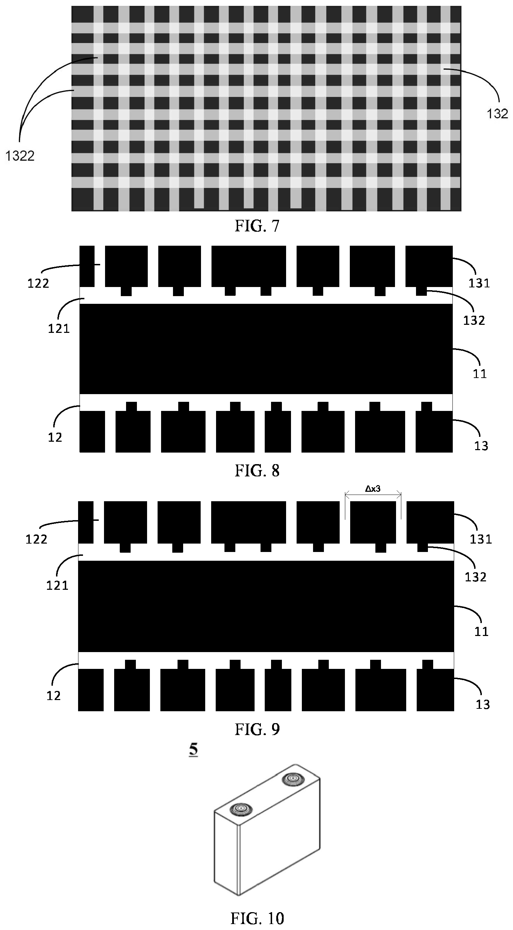

The shape of the orthographic projection of the second sub-protrusion portion 1322 on the surface of the conductive layer includes a stripe shape (refer to FIG. 6 and FIG. 7).

The stripe shape can further increase the area of contact between the conductive layer and the binding layer, and further enhance the wettability of the surface of the protrusion, helping the binder to better wet the protrusion, thereby further improving the binding force between the binding layer and the conductive layer. In addition, the stripe shape can further improve the elastic modulus of the binding layer, and further improve the elastic modulus of the entire composite current collector.

In some examples, the stripe shape includes, but is not limited to, one or more of an elliptic stripe, a polygonal stripe, an arc-shaped stripe, and a wavy stripe, and is optionally an elliptic stripe.

The elliptic stripe can enable the interior of the second sub-protrusion portion to better communicate, so that wettability of the surface of the protrusion is further enhanced, a wetting effect of the binder on the protrusion is improved, and a contact area between the conductive layer and the binding layer is further increased, thereby further improving the binding force between the binding layer and the conductive layer.

In some implementations, the stripe shape includes alternating stripes (refer to FIG. 6) or intersecting stripes (refer to FIG. 7), optionally, are intersecting stripes, and further optionally, are grid-shaped intersecting stripes.

It may be understood that in the present application, the "alternating stripes" mean that any two stripes do not

intersect with each other and have an interval between each other; and the "intersecting stripes" refers to a case in which stripes intersect with each other, for example, transversely alternating stripes and longitudinally alternating stripes intersect with each other.

In some implementations, the intersecting stripes include at least one intersecting portion.

The intersecting stripes can enable the protrusion on the entire surface to be in a communicating state, so that the binder flows in the protrusion better, and a wetting effect of the binder on the protrusion is improved, thereby improving the binding performance of the binding layer to the conductive layer.

In some examples, a shape of an orthographic projection of the intersecting portion on the surface of the conductive layer includes, but is not limited to, one or more of a circle, an ellipse, and a polygon, and is optionally a circle and/or an ellipse.

When the shape of the orthographic projection of the intersecting portion on the surface of the conductive layer includes a circle and/or an ellipse, the intersecting portion does not include an acute tip. In this case, the binder may wet the intersecting portion more completely, thereby helping improve the binding force of the binding layer to the conductive layer, and reducing shedding of the conductive layer.

In some examples, an angle included in the shape of the orthographic projection of the intersecting portion on the surface of the conductive layer and a supplementary angle of the angle ≥ 45°.

It may be understood that, that the angle included in the shape of the orthographic projection of the intersecting portion on the surface of the conductive layer and a supplementary angle of the angle ≥ 45° means that when the shape of the orthographic projection is a polygon, each angle of the polygon and a supplementary angle of each angle ≥ 45°.

That the shape of the angle included in the orthographic projection of the intersecting portion on the surface of the conductive layer ≥ 45° helps the binder to wet the intersecting portion more completely, alleviates a problem that the intersecting portion is not easily wetted by the binder when having a tip, improves a binding force of the binding layer to the conductive layer, and lowers shedding of the conductive layer.

In some implementations, a protrusion height h2 (referring to FIG. 3) of the second sub-protrusion portion ranges from 15% to 85% of the thickness of the binding layer. For example, the protrusion height of the second sub-protrusion portion may be 15%, 30%, 45%, 60%, 75%, or 85% of the thickness of the binding layer, or fall within a range formed by any values described above.

It should be noted that the "protrusion height of the second sub-protrusion portion" refers to a distance between the highest point of the top of the second sub-protrusion portion and the surface of the conductive layer provided with the second sub-protrusion portion.

That the protrusion height of the second sub-protrusion portion falls within the foregoing range can further improve a support function of the second sub-protrusion portion for the binding layer while further improving the binding performance of the binding layer to the conductive layer, thereby improving the elastic modulus of the binding layer and the composite current collector.

In some implementations, the width d2 (referring to FIG. 6 and FIG. 7) of the second sub-protrusion portion ranges from 5 mm to 40 mm. For example, the width of the second sub-protrusion portion may be 5 mm, 10 mm, 20 mm, 30 mm, or 40 mm, or fall within a range formed by any values described above.

It should be noted that the "width of the second sub-protrusion portion" refers to a distance between two longer long sides of a stripe.

In some implementations, the spacing $\Delta x2$ (referring to FIG. 3) between two adjacent second sub-protrusion portions ranges from 20 mm to 150 mm. For example, the spacing between two adjacent second sub-protrusion portions may be 20 mm, 30 mm, 40 mm, 50 mm, 60 mm, 70 mm, 80 mm, 90 mm, 100 mm, 110 mm, 120 mm, 130 mm, 140 mm, or 150 mm, or fall within a range formed by any values described above.

It should be noted that the "spacing between two adjacent second sub-protrusion portions" refers to a horizontal distance between center points of two adjacent second sub-protrusion portions. It may be understood that the "horizontal" herein refers to a direction perpendicular to the thickness of the current collector and parallel to the surface of the conductive layer.

The protrusion height and the width of the second sub-protrusion portion and the spacing between two adjacent second sub-protrusion portions fall within the foregoing ranges. In one aspect, the binder can better wet the protrusion, thereby further improving the binding performance of the binding layer to the conductive layer, and further improving the binding force between the binding layer and the conductive layer. In the other aspect, the impact on the conductivity of the conductive layer may be further reduced.

In some implementations, a total area S1 of the orthographic projection of the first protrusion portion on the surface of the conductive layer and an area S of the surface of the conductive layer satisfy: $1\% \leq S1/S \leq 50\%$. For example, S1/S may be 1%, 3%, 5%, 7%, 10%, 20%, 30%, 40%, or 50%, or fall within a range formed by any values described above.

The total area S1 of the orthographic projection of the first protrusion portion on the surface of the conductive layer and the area S of the surface of the conductive layer satisfy the foregoing relationship, so that the composite current collector can further have sufficient mechanical strength while improving the binding force, thereby improving the

structural stability of the composite current collector, and improving the safety of the cell.

In some implementations, referring to FIG. 8, the binding 12 includes a binding layer body 121 and a second protrusion portion 122, and the second protrusion portion 122 protrudes in a thickness direction of the binding layer 12 and is embedded in the conductive layer 13.

Currently, in a process of preparing a conventional composite current collector having a sandwiched structure, a binder usually needs to be introduced to bind the conductive layer and the polymer material layer. in a process of introducing the binder and compounding the conductive layer and the polymer material layer, it is easy to form bubbles or pores between the binder layer formed by the binder and the conductive layer, causing poor binding force of the binder layer. Consequently, during machining of the cell, and during cyclic use of the cell, a problem that shedding of the conductive layer causes plunging of cell performance occurs easily.

According to this, the second protrusion portion disposed on the binding layer, in one aspect, can increase the surface area of contact between the binding layer and the adjacent conductive layer, to improve the binding force between the binding layer and the conductive layer; and in the other aspect, further helps to exhaust bubbles or pores formed between the binding layer and the conductive layer during a process of forming the binding layer by introducing the binder, so that the binding layer better adheres to the conductive layer, thereby improving the binding force between the binding layer and the conductive layer, effectively reducing shedding of the conductive layer, and further improving the cycle performance of a cell using the composite current collector. In addition, the second protrusion portion may also provide a support function for the binding layer to some extent, and increase the elastic modulus of the binding layer to some extent.

In some implementations, a protrusion height of the second protrusion portion is equal to a thickness of the conductive layer.

That the protrusion height of the second protrusion portion is equal to the thickness of the conductive layer, that is, the second protrusion portion extends through the conductive layer in the thickness direction of the composite current collector, helps further promote exhausting (that is, air exhausting performance) of bubbles or pores that are formed between the binding layer and the conductive layer in a process of forming the binding layer, thereby further improving the binding force between the binding layer and the conductive layer. In addition, that the protrusion height of the second protrusion portion is equal to the thickness of the conductive layer further helps to crack the conductive layer during thermal runaway, thereby improving safety of the composite current collector.

In some implementations, a plurality of second protrusion portions is provided, and the plurality of second protrusion portions is disposed at intervals.

The plurality of second protrusion portions is disposed at intervals, so that the composite current collector can further have sufficient mechanical strength while further improving the air exhausting performance, thereby improving the structural stability of the composite current collector.

In some implementations, there is a spacing between the second protrusion portion and the adjacent first protrusion portion.

The first protrusion portion and the second protrusion portion are both disposed, and there is a spacing between the first protrusion portion and the adjacent second protrusion portion, so that the interface contact between the conductive layer and the binding layer can be closer, helping further improve the binding force; and further facilitating improvement of a support function for the binding layer, thereby further improving the elastic modulus of the binding layer and the composite current collector. In addition, the composite current collector can further have sufficient mechanical strength, thereby improving the structural stability of the composite current collector.

In some examples, at least one first protrusion portion is disposed between two adjacent second protrusion portions.

Disposing the second protrusion portions and the first protrusion portions alternately can alleviate a problem of uneven air exhausting in a process of compounding the binding layer and the conductive layer, or alleviate a problem of local weakening of the conductivity of the conductive layer, to enable the composite current collector to obtain better comprehensive performance.

In some implementations, a total area S2 of an orthographic projection of the second protrusion portion on the surface of the conductive layer and a total area S1 of an orthographic projection of the first protrusion portion on the surface of the conductive layer satisfy: $S2<S1$.

The total area S2 of the orthographic projection of the second protrusion portion on the surface of the conductive layer and the total area S1 of the orthographic projection of the first protrusion portion on the surface of the conductive layer satisfy the foregoing relationship, so that generation of bubbles in a process of compounding the binding layer and the conductive layer can be reduced, the binding force can be improved, the performance of the cell can be ensured, and the safety can be improved.

In some implementations, a width d3 of the second protrusion portion ranges from 50 μm to 500 μm. For example, the width of the second protrusion portion may be 50 μm, 60 μm, 100 μm, 200 μm, 300 μm, 400 μm, or 500 μm, or fall within a range formed by any values described above.

It should be noted that similar to the width of the first sub-protrusion portion, the "width of the second protrusion

portion" in the present application refers to a maximum value of a distance between any two points on a contour of a shape of the orthographic projection of the second protrusion portion on the surface of the conductive layer (when the shape of the orthographic projection is a circular hole, an elliptic hole, a sectoral hole, or an arch-shaped hole), or a maximum side length of the contour (when the shape of the orthographic projection is a polygonal hole).

In some implementations, the spacing $\Delta x3$ (referring to FIG. 9) between two adjacent second protrusion portions ranges from 5 mm to 100 mm. For example, the spacing between two adjacent second protrusion portions may be 5 mm, 7 mm, 10 mm, 20 mm, 30 mm, 40 mm, 50 mm, 60 mm, 70 mm, 80 mm, 90 mm, or 100 mm, or fall within a range formed by any values described above.

It should be noted that the "spacing between two adjacent second protrusion portions" in the present application refers to a horizontal distance between center points of two adjacent second protrusion portions. It may be understood that the "horizontal" herein refers to a direction perpendicular to the thickness of the current collector and parallel to the surface of the conductive layer.

That the width of the second protrusion portion and the distance between two adjacent second protrusion portions fall within the foregoing ranges helps improve an air exhausting function of the second protrusion portion, helps the binder to wet the protrusion more completely, and can further alleviate a cracking problem that easily occurs at a position of the second protrusion portion in a machining process of the composite current collector, so that both the conductivity and the strength (mechanical) performance of the current collector can be considered while improving the binding force.

In some implementations, a shape of the orthographic projection of the second protrusion portion on the surface of the conductive layer includes, but is not limited to, one or more of a circular hole, an elliptic hole, a sectoral hole, an arch-shaped hole, and a polygonal hole, and is optionally a circular hole and/or an elliptic hole.

When the shape of the orthographic projection of the second protrusion portion on the surface of the conductive layer includes a circular hole and/or an elliptic hole, the second protrusion portion does not include an acute tip. In this case, the binder may wet the protrusion more completely, thereby helping improve the binding force of the binding layer to the conductive layer, and reducing shedding of the conductive layer.

In some examples, an angle included in the shape of the orthographic projection of the second protrusion portion on the surface of the conductive layer $\geq 45°$.

It may be understood that, that the angle included in the shape of the orthographic projection of the second protrusion portion on the surface of the conductive layer means that when the shape of the orthographic projection is a polygon, each angle of the polygon $\geq 45°$; and when the shape of the orthographic projection is a sector or an arch, a central angle corresponding to the sector or the arch $\geq 45°$.

That the angle included in the shape of the orthographic projection of the second protrusion portion on the surface of the conductive layer $\geq 45°$ helps the binder to wet the protrusion more completely, alleviates a problem that the second protrusion portion is not easily wetted by the binder when having a tip, improves a binding force of the binding layer to the conductive layer, and lowers shedding of the conductive layer.

In some implementations, a total area S2 of the orthographic projection of the second protrusion portion on the surface of the conductive layer and an area S of the surface of the conductive layer satisfy: $0.001\% \leq S2/S \leq 0.8\%$. For example, S2/S may be 0.001%, 0.003%, 0.005%, 0.007%, 0.01%, 0.03%, 0.05%, 0.07%, 0.1%, 0.3%, 0.5%, or 0.8%, or fall within a range formed by any values described above.

The total area S2 of the orthographic projection of the second protrusion portion on the surface of the conductive layer and the area S of the surface of the conductive layer satisfy the foregoing relationship, so that the composite current collector can further have sufficient mechanical strength while improving the binding force, thereby improving the structural stability of the composite current collector, and improving the safety of the cell.

In some implementations, the second protrusion portion includes a binder.

In some examples, the binder includes one or more of a composition of isocyanate containing a multifunctional group and a polyester polyol compound, polyurethane, an epoxy resin, polyacrylate, poly(vinyl acetate), unsaturated polyester, a phenolic resin, a urea-formaldehyde resin, a modified polyolefin resin, modified polyethylene, modified polypropylene, modified polyolefin, a silicone resin, an ethylene-acrylic acid copolymer, an ethylene-vinyl acetate copolymer, an ethylene-vinyl alcohol copolymer, an acrylate resin, polycarbonate, and polyamide.

In some examples, the polyurethane includes one or more of thermoplastic polyurethane and reactive polyurethane.

In some implementations, a thickness of the conductive layer body ranges from 0.5 μm to 5 μm. For example, the thickness of the conductive layer body may be 0.5 μm, 0.8 μm, 1 μm, 2 μm, 3 μm, 4 μm, or 5 μm, or fall within a range formed by any values described above.

In some implementations, a thickness of the binding layer body ranges from 0.5 μm to 3 μm. For example, the thickness of the binding layer body may be 0.5 μm, 0.8 μm, 1 μm, 1.5 μm, 2 μm, 2.5 μm, or 3 μm, or fall within a range formed by any values described above.

In some implementations, a thickness of the support layer ranges from 2 μm to 15 μm. For example, the thickness

of the support layer may be 2 μm, 4 μm, 6 μm, 8 μm, 10 μm, 12 μm, 14 μm, or 15 μm, or fall within a range formed by any values described above.

The thicknesses of the support layer, the binding layer body, and the conductive layer body fall within the foregoing ranges respectively, so that consideration may be taken into both the conductivity and the strength (mechanical) performance of the current collector while improving the binding force.

In some implementations, a binding force of the conductive layer ≥ 230 N/m.

It should be noted that the foregoing "binding force of the conductive layer" refers to a pulling force required to shed the conductive layer from the composite current collector when the composite current collector is subject to a binding force test, and may be tested by using a test method recorded below.

The binding force of the conductive layer falls within the foregoing range, so that not only a relatively high binding force exists between the binding layer and the conductive layer, but also the composite current collector has sufficient mechanical performance, thereby reducing poor machining caused by degradation of the mechanical performance in subsequent machining.

In some implementations, the support layer includes one or more of polyamide, polyimide, polyethylene terephthalate, polybutylene terephthalate, polyethylene naphthalate, polycarbonate, polyethylene, polypropylene, poly(propyl vinyl), an acrylonitrile-butadiene-styrene copolymer, vinyl alcohol, polystyrene, polyvinyl chloride, polyvinylidene difluoride, polytetrafluoroethylene, sodium polystyrene sulfonate, polyacetylene, silicone rubber, polyformaldehyde, polyphenylene ether, polyphenylene sulfide, polyethylene glycol, a poly(sulfur nitride) polymer material, polyphenyl, polypyrrole, polyaniline, polythiophene, polypyridine, cellulose, starch, protein, an epoxy resin, a phenolic resin, a derivative thereof, a cross-linked substance thereof, and a copolymer thereof.

In some implementations, the binding layer includes one or more of a composition of isocyanate containing a multifunctional group and a polyester polyol compound, polyurethane, an epoxy resin, polyacrylate, poly(vinyl acetate), unsaturated polyester, a phenolic resin, a urea-formaldehyde resin, a modified polyolefin resin, modified polyethylene, modified polypropylene, modified polyolefin, a silicone resin, an ethylene-acrylic acid copolymer, an ethylene-vinyl acetate copolymer, an ethylene-vinyl alcohol copolymer, an acrylate resin, polycarbonate, and polyamide.

In some examples, the polyurethane includes one or more of thermoplastic polyurethane and reactive polyurethane.

In some implementations, the conductive layer includes one or more of copper, aluminum, nickel, titanium, platinum, iron, cobalt, chrome, tungsten, molybdenum, magnesium, lead, indium, and tin.

According to a second aspect, the present application provides a preparation method for a composite current collector, which may be used to prepare the composite current collector according to the first aspect of the present application, and may include the following steps:

S1: Prepare a groove on at least one side surface of a metal foil, and prepare and form a conductive layer.
S2: Coat the side surface of the conductive layer provided with the groove with a slurry containing a binder, to prepare a binding layer, and after drying, form a composite layer containing the binding layer and the conductive layer.
S3: Perform compounding treatment on the composite layer containing the binding layer and the conductive layer, and a support layer, to prepare a composite current collector.

In some examples, in step S1, the groove may be prepared on the at least one side surface of the metal foil by using an etching method.

It may be understood that after the metal foil is etched to form the groove, the first protrusion portion and the conductive layer body are prepared on the surface of the metal foil, to form the conductive layer.

In some examples, an etching depth of the groove is less than or equal to a thickness of the metal foil. optionally, an etching depth of the groove is less than a thickness of the metal foil.

It may be understood that when the etching depth of the groove is less than the thickness of the metal foil, the conductive layer including the first protrusion portion can be prepared. When the etching depth of the groove is equal to the thickness of the metal foil, the binding layer including the second protrusion portion can be prepared.

In some examples, the conductive layer includes a conductive layer body and a first protrusion portion, and the first protrusion portion protrudes in a thickness direction of the conductive layer and is embedded in the binding layer.

In some examples, the binding layer includes a binding layer body and a second protrusion portion, and the second protrusion portion protrudes in a thickness direction of the binding layer and is embedded in the conductive layer.

It may be understood that, in step S2, after the side surface of the conductive layer provided with the groove is coated with the slurry containing the binder, the slurry penetrates into the groove and fills the groove. After the groove is completely filled, a slurry layer may be continuously applied and formed on the surface of the conductive layer. After drying, the slurry layer is formed into the binding layer body, the groove filled with the slurry (when the etching depth of the groove is equal to the thickness of the metal foil) is formed into the second protrusion portion, and the binding layer body and the second protrusion portion are integrated and form the binding layer. In this way, the binding layer and the conductive layer

may be compounded, so that the second protrusion portion is embedded in the conductive layer.

In some examples, the compounding treatment in step S3 includes: performing hot-pressing compounding on the composite layer containing the binding layer and the conductive layer, and the support layer, where the binding layer in the composite layer is in contact with the support layer.

A temperature of the hot-pressing compounding is close to a melting point of the binder, so that the binder is in a sufficiently softened or melted state. The binder in the sufficiently softened or melted state may be better compounded with the binding layer in the composite layer.

It should be noted that when the binding layer includes the second protrusion portion, in one aspect, existence of the second protrusion portion may play a role in removing bubbles when the slurry containing the binder is applied, to reduce bubbles and pores between the conductive layer and the binding layer, and improve a binding force between the conductive layer and the binding layer. In the other aspect, during the hot-pressing compounding, bubbles may be exhausted from the second protrusion portion. Therefore, existence of the second protrusion portion may further remove bubbles, thereby further improving the binding force.

In some examples, step S1 further includes a process of performing passivation treatment on the conductive layer.

In some examples, a passivation agent for the passivation treatment includes one or more of chromate, organic phosphate, $Al_2O_3$, $SiO_2$, and $Si_3N_4$.

It may be understood that, in the foregoing steps, a material of the metal foil, a material of the binder, and a material of the support layer may respectively correspond to the material included in the conductive layer, the material of the binder, and the material included in the support layer in the first aspect of the present application, and details are not described herein again.

According to a third aspect, the present application provides an electrode plate, including the composite current collector according to the first aspect of the present application or a composite current collector prepared by using the preparation method according to the second aspect of the present application.

In some examples, the electrode plate includes a positive electrode plate and/or a negative electrode plate.

It may be understood that, the composite current collector according to the first aspect of the present application or a composite current collector prepared by using the preparation method according to the second aspect of the present application may be used for the positive electrode plate and/or the negative electrode plate.

In addition, the secondary battery and power consuming apparatus of the present application are described below with appropriate reference to the accompanying drawings.

Generally, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte functions to conduct ions between the positive electrode plate and the negative electrode plate. The separator is arranged between the positive electrode plate and the negative electrode plate and mainly serves to prevent a short circuit between the positive and negative electrodes while allowing ions to pass through.

Positive electrode plate

The positive electrode plate includes a positive electrode current collector and a positive electrode active material layer arranged on at least one surface of the positive electrode current collector. The positive electrode active material layer includes a positive electrode active material.

As a non-limiting example, the positive electrode current collector has two opposite surfaces in its own thickness direction, and the positive electrode active material layer is disposed on either or both of the two opposite surfaces of the positive electrode current collector.

In some examples, the positive electrode current collector may be the composite current collector in the first aspect of the present application.

In some examples, introduction of the positive electrode current collector may be a metal foil or another composite current collector. For example, as the metal foil, an aluminum foil may be used. The composite current collector may include a polymer material base layer or a metal layer located on at least one surface of the polymer material base layer. The composite current collector can be formed by forming a metal material on a polymer material substrate. In the positive electrode current collector, non-limiting examples of the metal material may include one or more of aluminum, an aluminum alloy, nickel, a nickel alloy, titanium, a titanium alloy, silver, a silver alloy, and the like. In the positive electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some examples, the negative electrode may be a positive electrode active material used for a battery, which is well known in the art. As a non-limiting example, the positive electrode active material may include one or more of the

following materials: a lithium-containing phosphate of an olivine structure, a lithium transition metal oxide, and their respective modified compounds. However, the present application is not limited to these materials, and other conventional materials that can be used as positive electrode active materials for batteries can also be used. Only one or a combination of two or more of the positive electrode active materials may be used. Examples of lithium transition metal oxide may be, but are not limited to, one or more selected from the group consisting of lithium cobalt oxide (for example, $LiCoO_2$), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the lithium-containing phosphate with an olivine structure can include, but are not limited to, one or more of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon. A non-limiting example of the lithium-cobalt oxide may include $LiCoO_2$. A non-limiting example of the lithium-nickel oxide may include $LiNiO_2$. A non-limiting example of the lithium manganese oxide may include $LiMnO_2$, $LiMn_2O_4$, or the like. A non-limiting example of the lithium nickel cobalt manganese oxide may include $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), $LiNi_{0.8}Co_{0.1}Mn_{0.1}O_2$ ($NCM_{811}$ for short), or the like. A non-limiting example of the lithium-nickel-cobalt-aluminum oxide may include $LiNi_{0.8}Co_{0.15}Al_{0.05}O_2$.

It may be understood that, the battery will be accompanied by the deintercalation and consumption of lithium (Li) during the charging and discharging process, and the content of Li in the positive electrode plate varies as the battery is discharged to different states. In the list of the positive electrode material in the present application, the content of Li is an initial material state, unless otherwise specified. When the positive electrode material is applied to a positive electrode plate in a battery system, after charging and discharging cycles, the content of Li in the positive electrode material included in the electrode plate usually changes. The content of Li may be measured by using a molar content, but is not limited thereto. For "the content of Li is an initial material state", the initial material state refers to a state before being fed to the positive electrode slurry. It may be understood that new materials obtained by performing proper modification based on the listed positive electrode materials also fall within the scope of the positive electrode materials. The foregoing proper modification refers to a modification manner that is acceptable for the positive electrode materials, whose non-limiting example is coating modification.

In the list of the positive electrode materials in the present application, a content of oxygen (O) is merely a theoretical state value. Oxygen released by a lattice causes a change in the molar content of O, and the actual content of O floats. The content of O may be measured by using a molar content, but is not limited thereto.

In some implementations, the positive electrode active material may alternatively include at least one of the following materials: one or more of a sodium transition metal oxide, a polyanionic compound, and a Prussian blue compound. However, the present application is not limited to these materials. Other well-known traditional materials that can be used as positive electrode active materials for sodium ion batteries may also be used.

In an optional technical solution of the present application, in the sodium transition metal oxide, the transition metal may include one or more of Mn, Fe, Ni, Co, Cr, Cu, Ti, Zn, V, Zr, and Ce. A non-limiting example of the sodium transition metal oxide may be $Na_xMO_2$, where M may include one or more of Ti, V, Mn, Co, Ni, Fe, Cr, and Cu, and $0<x\leq 1$.

In an optional technical solution of the present application, the polyanionic compound may be a class of compounds having sodium ions, transition metal ions, tetrahedral $(YO_4)^{n-}$ anion units. The transition metal may include one or more of Mn, Fe, Ni, Co, Cr, Cu, Ti, Zn, V, Zr, and Ce; Y may be one or more of P, S, and Si; and n represents a valence of $(YO_4)^{n-}$.

The polyanionic compound may alternatively be a type of compound including sodium ions, transition metal ions, tetrahedral $(YO_4)^{n-}$ anion units, and halogen anions. The transition metal may include one or more of Mn, Fe, Ni, Co, Cr, Cu, Ti, Zn, V, Zr, and Ce; Y may be one or more of P, S, and Si, and n represents a valence of $(YO_4)^{n-}$; and the halogen may be one or more of F, Cl, and Br.

The polyanionic compound may alternatively be a type of compound including sodium ions, tetrahedral $(YO_4)^{n-}$ anion units, polyhedral units $(ZO_y)^{m+}$, and optional halogen anions. Y may be one or more of P, S, and Si, and n represents a valence of $(YO_4)^{n-}$; Z represents a transition metal and may include one or more of Mn, Fe, Ni, Co, Cr, Cu, Ti, Zn, V, Zr, and Ce, and m represents a valence of $(ZO_y)^{m+}$; and the halogen may be one or more of F, Cl, and Br.

The polyanionic compound may include one or more of $NaFePO_4$, $Na_3V_2(PO_4)_3$ (sodium vanadium phosphate, referred to as NVP for short), $Na_4Fe_3(PO_4)_2(P_2O_7)$, $NaM'PO_4F$, and $Na_3(VO_y)_2(PO_4)_2F_{3-2y}$ ($0\leq y\leq 1$). M' in $NaM'PO_4F$ may include one or more of V, Si, Mn, and Ni.

The Prussian blue compound may be a type of compound including sodium ions, transition metal ions, and cyanide ions ($CN^-$). The transition metal may include one or more of Mn, Fe, Ni, Co, Cr, Cu, Ti, Zn, V, Zr, and Ce. A non-limiting example of the Prussian blue compound may be $Na_aMe_bMe'_c(CN)_6$, where Me and Me' may be independently one or more of Ni, Cu, Fe, Mn, Co, and Zn, and $0 < a \leq 2$, $0 < b < 1$, and $0 < c < 1$.

In some examples, the positive electrode active material layer may further optionally include a binder. Non-limiting examples of the binder may include one or more of polyvinylidene difluoride (PVDF), polytetrafluoroethylene

(PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer and a fluorine-containing acrylate resin.

In some examples, the positive electrode active material layer may further optionally include a conductive agent. Non-limiting examples of the conductive agent may include one or more of superconducting carbon, acetylene black, carbon black, Ketjen black, carbon dot, carbon nanotubes, graphene, and carbon nanofibers.

In some examples, the positive electrode plate may be prepared in the following manner: dispersing the above components for preparing the positive electrode plate, for example, the positive electrode active material, the conductive agent, the binder, and any other components, in a solvent to form a positive electrode slurry; and coating at least one side surface of the positive electrode current collector with the positive electrode slurry, performing working procedures such as drying and cold pressing, and then obtaining the positive electrode plate. The solvent can be selected from, but is not limited to, any one listed in the foregoing examples, for example, N-methylpyrrolidone (NMP). The surface of the positive electrode current collector coated with the positive electrode slurry may be a single surface of the positive electrode current collector, or two surfaces of the positive electrode current collector. A solid content of the positive electrode slurry may range from 40wt% to 80wt%. The viscosity of the positive electrode slurry at the room temperature may be adjusted to 5000 to 25000 millipascal·second (mPa·s). When the positive electrode slurry is applied, the application unit surface density based on a dry weight (deducting the solvent) may range from 15 to 35 mg/cm$^2$. The compaction density of the positive electrode plate may range from 3.0 to 3.6 g/cm$^3$, and optionally range from 3.3 to 3.5 g/cm$^3$.

## Negative electrode plate

A negative electrode plate includes a negative electrode current collector and a negative electrode active material layer disposed on at least one surface of the negative electrode current collector. The negative electrode active material layer includes a negative electrode active material.

As a non-limiting example, the negative electrode current collector has two opposite surfaces in its own thickness direction, and the negative electrode active material layer is disposed on either or both of the two opposite surfaces of the negative electrode current collector.

In some examples, the negative electrode current collector may be the composite current collector in the first aspect of the present application.

In some examples, the negative electrode current collector may alternatively be a metal foil or another composite current collector. For example, as the metal foil, a copper foil may be used. The composite current collector may include a polymer material base layer or a metal layer located on at least one surface of the polymer material substrate. The composite current collector can be formed by forming a metal material on a polymer material substrate. In the negative electrode current collector, non-limiting examples of the metal material may include one or more of copper, a copper alloy, nickel, a nickel alloy, titanium, a titanium alloy, silver, a silver alloy, and the like. In the negative electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some examples, the negative electrode active material may use a negative electrode active material used for batteries well known in the art. As a non-limiting example, the negative electrode active material may include one or more of the following materials: artificial graphite, natural graphite, soft carbon, hard carbon, a silicon-based material, a tin-based material, lithium titanate, or the like. The silicon-based material may include one or more of elemental silicon, a silicon oxide, a silicon-carbon composite, a silicon-nitrogen composite, and a silicon alloy. The tin-based material may include one or more of elemental tin, a tin oxide, and a tin alloy. However, the present application is not limited to such materials, and may alternatively use other conventional materials that can be used as negative electrode active materials for batteries. Only one or a combination of two or more of the negative electrode active materials may be used.

In some examples, the negative electrode active material layer may further optionally include a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some examples, the negative electrode active material layer may further optionally include a conductive agent. The conductive agent may include one or more of superconducting carbon, acetylene black, carbon black, Ketjen black, carbon dots, carbon nanotubes, graphene, and carbon nanofibers.

In some examples, the negative electrode active material layer further optionally includes another adjuvant, such as a thickener (for example, sodium carboxymethyl cellulose (CMC-Na)).

In some examples, the negative electrode plate may be prepared in the following manner: dispersing the above-mentioned components for preparing the negative electrode plate, for example, the negative electrode active material, the conductive agent, the binder, and any other components, in a solvent (a non-limiting example of the solvent is deionized water) to form a negative electrode slurry; and coating at least one side surface of the negative electrode current collector

with the negative electrode slurry, performing working procedures such as drying and cold pressing, and then obtaining the negative electrode plate. The surface of the negative electrode current collector coated with the negative electrode slurry may be a single surface of the negative electrode current collector, or two surfaces of the negative electrode current collector. A solid content of the negative electrode slurry may range from 40wt% to 60wt%. The viscosity of the negative electrode slurry at the room temperature may be adjusted to 2000 to 10000 mPa·s. When the negative electrode slurry is applied, the application unit surface density based on a dry weight (deducting the solvent) may range from 75 to 220 $g/m^2$. The compaction density of the negative electrode plate may range from 1.0 $g/cm^3$ to 1.8 $g/cm^3$.

Electrolyte

The electrolyte serves to conduct ions between the positive electrode plate and the negative electrode plate. The type of the electrolyte is not particularly limited in the present application, and can be selected according to requirements. For example, the electrolyte can be liquid, gelled, or all solid.

In some examples, the electrolyte is an electrolyte solution. The electrolyte solution includes an electrolyte salt and a solvent.

In some examples, the electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl) imide (LiFSI), lithium bis(trifluoromethanesulfonyl)imide (LiTFSI), lithium triflate (LiTFS), lithium difluorophosphate ($LiPO_2F_2$), lithium difluoro(oxalato)borate (LiDFOB), lithium bis(oxalato)borate (LiBOB), lithium difluorobis(oxalate) phosphate (LiDFOP), and lithium tetrafluoro(oxalato)phosphate (LiTFOP).

In some examples, the solvent may include one or more of ethylene carbonate (EC,

), propylene carbonate (PC,

), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (

), fluoroethylene carbonate (FEC), methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some examples, the electrolyte solution further optionally includes an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), and the like.

Separator

In some examples, the secondary battery further includes a separator. The type of the separator is not specifically limited in the present application, and any well-known separator with a porous structure having good chemical stability and

mechanical stability may be selected.

In some examples, the material of the separator may include one or more of glass fiber, non-woven cloth, polyethylene, polypropylene, and polyvinylidene difluoride. The separator can be either a single-layer thin film or a multi-layer composite thin film without special limitations. When the separator is a multi-layer composite thin film, the materials of the layers can be the same or different without special limitations.

In some implementations, the thickness of the separator ranges from 6 to 40 μm, and optionally ranges from 12 to 20 μm.

In some examples, the positive electrode plate, the negative electrode plate, and the separator may be made into an electrode assembly by a winding process or a laminating process.

In some examples, a secondary battery may include an outer package. The outer package can be used to encapsulate the above electrode assembly and electrolyte.

In some examples, the outer packaging of the secondary battery may be a hard case, such as a hard plastic case, an aluminum case, or a steel case. The outer package of the secondary battery may also be a soft package, for example, a pouch-type soft package. The material of the soft pack may be plastic, and further, a non-limiting example of the plastic may include one or more of polypropylene, polybutylene terephthalate, and polybutylene succinate.

The secondary battery includes at least one battery cell. The secondary battery may include one or more battery cells.

In the present application, unless otherwise specified, a "battery cell" refers to a basic unit that can implement interconversion of chemical energy and electric energy, and further, generally includes at least a positive electrode plate, a negative electrode plate, and an electrolyte. During the charging and discharging process of the battery, active ions are intercalated and deintercalated back and forth between the positive electrode plate and the negative electrode plate. The electrolyte functions to conduct active ions between the positive electrode plate and the negative electrode plate.

A shape of the battery cell is not particularly limited in the present application, and may be cylindrical, prismatic, or any other shape. FIG. 10 shows a prismatic battery cell 5 as an example.

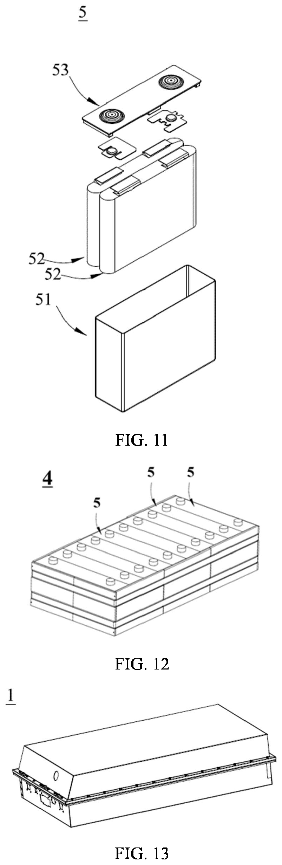

In some examples, referring to FIG. 11, the outer package can include a case 51 and a cover plate 53. The case 51 can include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator may be made into an electrode assembly 52 by a winding process or a laminating process. The electrode assembly 52 is enclosed in the accommodating cavity. An electrolyte solution infiltrates into the electrode assembly 52. The number of electrode assemblies 52 contained in the battery cell 5 may be one or more, and may be selected by a person skilled in the art according to actual requirements.

The secondary battery may be a battery module 4 or a battery pack 1.

The battery module includes at least one battery cell. The number of battery cells contained in the battery module can one or more, and the proper number can be selected by those skilled in the art based on the application and capacity of the battery module.

FIG. 12 shows a battery module 4 as an example. Referring to FIG. 12, in the battery module 4, multiple battery cells 5 may be sequentially disposed in the length direction of the battery module 4. Certainly, the plurality of battery cells may alternatively be arranged in any other manner. The plurality of battery cells 5 can be further fixed by fasteners.

optionally, the battery module 4 may further include a housing with an accommodating space, and the plurality of battery cells 5 are accommodated in the accommodating space.

In some examples, the above battery module can further be assembled into a battery pack. The number of battery modules contained in the battery pack can be one or more, and the proper number can be selected by those skilled in the art according to the application and capacity of the battery pack.

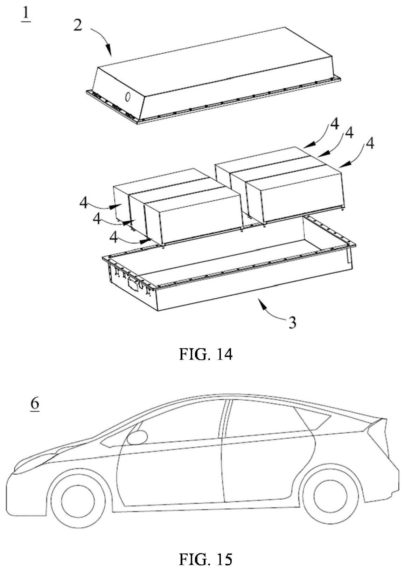

FIG. 13 and FIG. 14 show a battery pack 1 as an example. Referring to FIG. 13 and FIG. 14, the battery pack 1 may include a battery box and a plurality of battery modules 4 arranged in the battery box. The battery box includes an upper box 2 and a lower box 3. The upper box 2 can cover the lower box 3 to form a closed space for accommodating the battery modules 4. The plurality of battery modules 4 may be arranged within the battery box in any manner.

In addition, the present application further provides a power consuming apparatus. The power consuming apparatus includes the secondary battery of the present application. The secondary battery may be used as a power supply of the power consuming apparatus, or may be used as an energy storage unit of the power consuming apparatus. The power consuming apparatus may include, but is not limited to, a mobile device, an electric vehicle, an electric train, a ship, a satellite, and an energy storage system. The mobile device may be, for example, a mobile phone, and a laptop; and the electric vehicle may be, for example, without limitation, an all-electric vehicle, a hybrid electric vehicle, a plug-in hybrid electric vehicle, an electric bicycle, an electric scooter, an electric golf cart, and an electric truck.

For the power consuming apparatus, the secondary battery can be selected according to the requirements during use.

FIG. 15 shows an example of a power consuming apparatus 6. The power consuming apparatus is an all-electric

vehicle, a hybrid electric vehicle, a plug-in hybrid electric vehicle, or the like. To satisfy the need of the power consuming apparatus for a high power and high energy density of secondary batteries, a battery pack or a battery module can be used.

The apparatus as another example may be a mobile phone, a tablet computer, a laptop, and the like. The apparatus is generally required to be light and thin, and may use a secondary battery as a power source.

Examples

The examples of the present application are described below. The examples described below are illustrative, are merely used to explain the present application, and should not be construed as a limitation to the present application. In examples in which no technologies or conditions are specified, technologies or conditions described in the literature in the art or product specifications are followed. The reagents or instruments without manufacturer indicated are all conventional products that may be purchased in the market.

Example 1

(1) Preparation of a composite current collector

①: A groove is etched on a single side surface of an aluminum foil having a thickness of 10 μm, and then the aluminum foil is passivated by using sodium chromate, to prepare a conductive layer.
②: A side surfaces of the conductive layer on which a groove is etched is coated with a slurry containing polyurethane, to form a slurry layer having a coating thickness of 1 μm, and after the slurry layer is dried, a binding layer is formed, to prepare a composite layer.
③: Hot-pressing compounding is performed on the composite layer and a support layer having a thickness of 8 μm, the binding layer is caused to come into contact with the support layer.
④: After hot-pressing compounding, curing is performed at 85°C for 72 hours.
⑤: ① to ④ are repeated to compound the other side of the support layer and the aluminum foil.
⑥: The metal layer is thinned by using a solution of NaOH to prepare the composite current collector.

(2) Preparation of a positive electrode plate

$LiNi_{0.8}Co_{0.1}Mn_{0.1}O_2$ and $LiNi_{0.5}Co_{0.2}Mn_{0.3}O_2$ were mixed at a ratio of 17:3 to serve as a positive electrode active substance. The positive electrode active substance, super-conductive carbon black SP as a conductive agent, and polyvinylidene difluoride (PVDF) as a binder were dispersed in N-methylpyrrolidone (NMP) as a solvent at a mass ratio of 95:3:2, and mixed evenly, to obtain a positive electrode slurry; and the two side surfaces of the composite current collector prepared in step (1) were evenly coated with the positive electrode slurry, dried, and then cold-pressed to obtain a positive electrode plate.

(3) Preparation of a negative electrode plate

A negative electrode active material graphite, a thickener sodium carboxymethyl cellulose, a binder styrene-butadiene rubber, and a conductive agent acetylene black were mixed in a mass ratio of 97:1:1:1, deionized water was added, and a negative electrode slurry was obtained under the action of a vacuum stirrer; two side surfaces of a copper foil were evenly coated with the negative electrode slurry; and after the copper foil was air-dried at room temperature, the copper foil was transferred to an oven at 120°C and dried for 1h, and then, cold pressing and cutting were performed, to obtain a negative electrode plate.

(4) Separator

A polypropylene separator with a thickness of 12 μm was adopted.

(5) Preparation of an electrolyte solution

An organic solvent was a mixed solution containing ethylene carbonate (EC), ethyl methyl carbonate (EMC) and diethyl carbonate (DEC), in which the volume ratio of EC to EMC to DEC was 20:20:60. In an argon atmosphere glove box with a water content < 10 ppm, fully dried lithium salt $LiPF_6$ was dissolved in the organic solvent and mixed uniformly to obtain the electrolyte solution. The concentration of the lithium salt was 1 mole/liter (mol/L).

(6) Preparation of a battery

The positive electrode plate, the separator and the negative electrode plate were stacked in sequence, in which the separator was between the positive electrode plate and the negative electrode plate to achieve an isolation effect. Then the positive electrode plate, the separator and the negative electrode plate were wound into a square nude cell, fed into an aluminum shell and roasted at 80°C to remove water. Then, corresponding non-aqueous electrolyte solution was injected, and processes such as standing, formation, secondary liquid injection, sealing, capacity, and blue film wrapping were carried out to obtain a battery.

Example 2 to Example 32

The preparation process is similar to that of Example 1, and a difference lies in that parameters of the composite current collector are adjusted. For details, refer to the following Table 1.

Comparative Example 1

The preparation process is similar to that of Example 1, and a difference lies in that in step ①, no groove is etched on the two side surfaces of the aluminum foil, that is, no first protrusion portion is disposed on the conductive layer, and no second protrusion portion is disposed on the binding layer.

Table 1

| | Conductive layer | | | | | | | | | | | | | | | Binding layer | | | | |
|---|---|---|---|---|---|---|---|---|---|---|---|---|---|---|---|---|---|---|---|---|
| | First protrusion portion | | | | | | | | | | | | | | | Second protrusion portion | | | | |
| | | First sub-protrusion portion | | | | | | Second sub-protrusion portion | | | | | | | | | | | | |
| | Whether it exists | Whether it exists | Orthographic projection | h1 (nm) | Ratio (%) of h1 to the thickness of the binding layer | d1 (mm) | Δx1 (mm) | Whether it exists | Orthographic projection: Distribution state | Orthographic projection: Shape | h2 (nm) | Ratio (%) of h2 to the thickness of the binding layer | d2 (mm) | Δx2 (mm) | S1/S (%) | Whether it exists | Orthographic projection | d3 (μm) | Δx3 (mm) | S2/S (%) |
| Example 1 | Yes | Yes | Circular hole | 500 | 50 | 20 | 40 | No | / | / | / | / | / | / | 19.6 | No | / | / | / | 0 |
| Example 2 | Yes | Yes | Circular hole | 150 | 15 | 20 | 40 | No | / | / | / | / | / | / | 19.6 | No | / | / | / | 0 |
| Example 3 | Yes | Yes | Circular hole | 500 | 50 | 20 | 40 | No | / | / | / | / | / | / | 19.6 | No | / | / | / | 0 |
| Example 4 | Yes | Yes | Circular hole | 850 | 85 | 20 | 40 | No | / | / | / | / | / | / | 19.6 | No | / | / | / | 0 |
| Example 5 | Yes | Yes | Circular hole | 50 | 5 | 20 | 40 | No | / | / | / | / | / | / | 19.6 | No | / | / | / | 0 |
| Example 6 | Yes | Yes | Circular hole | 950 | 95 | 20 | 40 | No | / | / | / | / | / | / | 19.6 | No | / | / | / | 0 |
| Example 7 | Yes | Yes | Circular hole | 500 | 50 | 5 | 44 | No | / | / | / | / | / | / | 1.0 | No | / | / | / | 0 |
| Example 8 | Yes | Yes | Circular hole | 500 | 50 | 50 | 62.5 | No | / | / | / | / | / | / | 50.2 | No | / | / | / | 0 |
| Example 9 | Yes | Yes | Circular hole | 500 | 50 | 5 | 10 | No | / | / | / | / | / | / | 19.6 | No | / | / | / | 0 |
| Example 10 | Yes | Yes | Circular hole | 500 | 50 | 15 | 50 | No | / | / | / | / | / | / | 7.1 | No | / | / | / | 0 |
| Example 11 | Yes | Yes | Circular hole | 500 | 50 | 15 | 100 | No | / | / | / | / | / | / | 1.8 | No | / | / | / | 0 |
| Example 12 | Yes | Yes | Circular hole | 500 | 50 | 5 | 6 | No | / | / | / | / | / | / | 54.5 | No | / | / | / | 0 |
| Example 13 | Yes | Yes | Circular hole | 500 | 50 | 15 | 150 | No | / | / | / | / | / | / | 0.8 | No | / | / | / | 0 |
| Example 14 | Yes | Yes | Square hole | 500 | 50 | 25 | 40 | No | / | / | / | / | / | / | 39.1 | No | / | / | / | 0 |
| Example 15 | Yes | Yes | Sectoral hole | 500 | 50 | 25 | 35 | No | / | / | / | / | / | / | 17.1 | No | / | / | / | 0 |

| | | | | | | | | | | | | | | | | | | | | |
|---|---|---|---|---|---|---|---|---|---|---|---|---|---|---|---|---|---|---|---|---|
| Example 16 | Yes | No | / | / | / | / | / | Yes | Grid intersection | Rectangle | 500 | 50 | 5 | 40 | 23.4 | No | / | / | / | 0 |
| Example 17 | Yes | No | / | / | / | / | / | Yes | Alternating | Rectangle | 500 | 50 | 25 | 50 | 50.0 | No | / | / | / | 0 |
| Example 18 | Yes | No | / | / | / | / | / | Yes | Grid intersection | Rectangle | 150 | 15 | 10 | 50 | 36.0 | No | / | / | / | 0 |
| Example 19 | Yes | No | / | / | / | / | / | Yes | Grid intersection | Rectangle | 500 | 50 | 10 | 50 | 36.0 | No | / | / | / | 0 |
| Example 20 | Yes | No | / | / | / | / | / | Yes | Grid intersection | Rectangle | 850 | 85 | 10 | 50 | 36.0 | No | / | / | / | 0 |
| Example 21 | Yes | No | / | / | / | / | / | Yes | Grid intersection | Rectangle | 500 | 50 | 5 | 50 | 19.0 | No | / | / | / | 0 |
| Example 22 | Yes | No | / | / | / | / | / | Yes | Grid intersection | Rectangle | 500 | 50 | 40 | 150 | 46.2 | No | / | / | / | 0 |
| Example 23 | Yes | No | / | / | / | / | / | Yes | Grid intersection | Rectangle | 500 | 50 | 5 | 20 | 43.8 | No | / | / | / | 0 |
| Example 24 | Yes | No | / | / | / | / | / | Yes | Grid intersection | Rectangle | 500 | 50 | 25 | 100 | 43.8 | No | / | / | / | 0 |
| Example 25 | Yes | Yes | Circular hole | 500 | 50 | 20 | 40 | Yes | Grid intersection | Rectangle | 500 | 50 | 5 | 40 | 43.1 | No | / | / | / | 0 |
| Example 26 | Yes | Yes | Circular hole | 500 | 50 | 20 | 40 | No | / | / | / | / | / | / | 19.6 | Yes | Circular hole | 50 | 10 | 0.0020 |
| Example 27 | Yes | Yes | Circular hole | 500 | 50 | 20 | 40 | No | / | / | / | / | / | / | 19.6 | Yes | Circular hole | 250 | 30 | 0.0055 |
| Example 28 | Yes | Yes | Circular hole | 500 | 50 | 20 | 40 | No | / | / | / | / | / | / | 19.6 | Yes | Circular hole | 500 | 5 | 0.7850 |
| Example 29 | Yes | Yes | Circular hole | 500 | 50 | 20 | 40 | No | / | / | / | / | / | / | 19.6 | Yes | Circular hole | 350 | 100 | 0.0010 |
| Example 30 | Yes | Yes | Circular hole | 500 | 50 | 20 | 40 | No | / | / | / | / | / | / | 19.6 | Yes | Circular hole | 500 | 1 | 19.6250 |
| Example 31 | Yes | Yes | Circular hole | 500 | 50 | 20 | 40 | No | / | / | / | / | / | / | 19.6 | Yes | Circular hole | 250 | 200 | 0.0001 |
| Example 32 | Yes | Yes | Circular hole | 500 | 50 | 20 | 40 | Yes | Grid intersection | Rectangle | 500 | 50 | 5 | 40 | 43.1 | Yes | Circular hole | 250 | 30 | 0.0055 |
| Comparative Example 1 | No | No | / | / | / | / | / | No | / | / | / | / | / | / | / | No | / | / | / | / |

In addition, performance tests are performed on the composite current collectors and the batteries obtained in the foregoing Example 1 to Example 32 and the foregoing comparative example 1, and test results are shown in Table 2.

Test section

(1) Test of protrusion heights and sizes of the first protrusion portion and the second protrusion portion

Ion milling (CP) sample preparation is performed on the composite current collector, and then Scanning Electron Microscope (SEM) observation is performed, to measure the heights of the first protrusion portion and the second protrusion portion by using an SEM device; and the sizes of the first protrusion portion and the second protrusion portion are directly observed and measured under an SEM by using a metal foil.

(2) Test of a binding force of the conductive layer

After a sample is laminated to a non-corona side of an ethylene-acrylic acid copolymer (EAA) film, the EAA film is covered with PET with a thickness of 12 μm, is placed on a heat sealing machine, and is laminated under a temperature of 120 degrees Celsius (°C) and a pressure of 0.2 megapascal (MPa). The laminated sample is trimmed to obtain a sample having a length of 100 mm and a width of 20 mm, and the non-laminated side of the conductive layer is laminated to a steel plate by using a 3M double-faced adhesive tape; the sample is clamped to a jig of a testing machine, and is subject to a 180° peeling test at a spacing of 50 mm and a speed of 300 millimeters/minute (mm/min), where a value of a peeling force is read and is converted into a unit of N/m, there are 5 parallel samples, and an average value of the peeling force is finally taken; and the average value of the peeling force = the sum of the peeling forces of the 5 test samples/5, and is used as the binding force of the conductive layer.

(3) Elastic modulus test

The composite current collector is cut into a shape of 15 mm * 150 mm strips, and a stretching test is performed at a gauge length of 50 mm and a stretching speed of 50 mm/min by using a universal testing machine, until cracking occurs in the test. A chord slope method is used for calculation by using a chord slope corresponding to a strain ranging from 0.05% to 0.5%. $E=(\sigma 2-\sigma 1)/(\varepsilon 2-\varepsilon 1)$, where E is an elastic modulus, and $\sigma 1$ is a stress in the unit of MPa measured when a strain value $\varepsilon 1$ = 0.001 (0.1%); and $\sigma 2$ is a stress in the unit of MPa measured when a strain value $\varepsilon 2$ = 0.01 (1%).

(4) Coating and wrinkling

A one-into-4 (that is, one electrode plate is coated and cut into 4 electrode plates) coating design is used, whether there is wrinkling at a tab during coating and whether there is a bulge at a position of the tab during rolling are observed, and it is determined that wrinkling exists when the bulge exceeds 1 mm.

(5) Cycle test

Cycling of charging at a rate of 1C and discharging at a rate of 1C is performed on a fresh battery cell under a high-temperature condition of 60°C, until the capacity fades to 80% of the initial capacity, and the number of cycles corresponding to this time, that is, the cycle performance of the corresponding battery, is recorded.

(6) Direct current resistance (DCR) test

The battery cell is adjusted to a state of 50% SOC, is discharged for 30 seconds (s) at a rate of 4C (the corresponding discharging current is I), and a voltage difference $\Delta V$ before and after 30s of discharging is recorded. A DCR corresponding to 50%SOC is calculated according to the following formula: DCR = $\Delta V/I$, to obtain DCR data of each battery cell.

Table 2

| | Composite current collector | | | Battery | |
|---|---|---|---|---|---|
| | Binding force of the conductive layer (N/m) | Elastic modulus (Gpa) | Whether coating is wrinkled | Number of cycles at 60°C | DCR (mΩ) |
| Example 1 | 238 | 8.3 | No | 505 | 1.53 |
| Example 2 | 236 | 8.4 | No | 508 | 1.52 |
| Example 3 | 232 | 8.1 | No | 504 | 1.53 |
| Example 4 | 231 | 8.2 | No | 502 | 1.52 |
| Example 5 | 235 | 7.6 | No | 469 | 1.64 |
| Example 6 | 191 | 7.7 | No | 462 | 1.65 |
| Example 7 | 232 | 8.4 | No | 501 | 1.55 |
| Example 8 | 237 | 8.3 | No | 509 | 1.58 |
| Example 9 | 234 | 8.4 | No | 506 | 1.57 |
| Example 10 | 236 | 8.5 | No | 505 | 1.53 |
| Example 11 | 242 | 8.5 | No | 503 | 1.51 |
| Example 12 | 195 | 8.2 | No | 468 | 1.65 |
| Example 13 | 190 | 8.4 | No | 461 | 1.69 |
| Example 14 | 244 | 8.3 | No | 511 | 1.58 |
| Example 15 | 241 | 8.4 | No | 498 | 1.65 |
| Example 16 | 251 | 8.3 | No | 501 | 1.52 |
| Example 17 | 254 | 8.2 | No | 502 | 1.53 |
| Example 18 | 253 | 8.1 | No | 505 | 1.51 |

(continued)

| | Composite current collector | | | Battery | |
|---|---|---|---|---|---|
| | Binding force of the conductive layer (N/m) | Elastic modulus (Gpa) | Whether coating is wrinkled | Number of cycles at 60°C | DCR (mΩ) |
| Example 19 | 254 | 8.2 | No | 504 | 1.5 |
| Example 20 | 255 | 8.1 | No | 505 | 1.55 |
| Example 21 | 250 | 8.0 | No | 506 | 1.52 |
| Example 22 | 252 | 8.1 | No | 504 | 1.53 |
| Example 23 | 253 | 8.2 | No | 503 | 1.53 |
| Example 24 | 251 | 8.2 | No | 501 | 1.54 |
| Example 25 | 261 | 8.5 | No | 510 | 1.48 |
| Example 26 | 272 | 8.1 | No | 510 | 1.49 |
| Example 27 | 273 | 7.8 | No | 512 | 1.46 |
| Example 28 | 274 | 7.9 | No | 513 | 1.48 |
| Example 29 | 275 | 8.0 | No | 511 | 1.47 |
| Example 30 | 258 | 6.8 | Yes | 455 | 1.66 |
| Example 31 | 251 | 7.9 | No | 503 | 1.54 |
| Example 33 | 302 | 8.3 | No | 520 | 1.45 |
| Comparative Example 1 | 151 | 5.8 | Yes | 352 | 1.81 |

It can be seen by comparing the examples with the comparative example 1 that, compared with a conventional composite current collector, the composite current collector provided in the present application and the battery using the composite current collector have higher binding performance and circle performance respectively.

The above description of the various examples tends to emphasize the differences between the various examples. The examples may be cross-referenced for identical or similar parts, and details are not described herein again for the sake of brevity.

It should be noted that the present application is not limited to the above examples. The above-described examples are merely exemplary, and examples having substantially the same technical idea and the same effects within the scope of the technical solution of the present application are all included in the technical scope of the present application. In addition, other examples constructed by applying various modifications conceivable to those skilled in the art to the examples and combining some of the constituent elements of the examples without departing from the scope of the essence of the present application are also included in the scope of the present application.

## Claims

1. A composite current collector, comprising:

    a support layer; and
    a binding layer and a conductive layer that are sequentially stacked on at least one side surface of the support layer, wherein the conductive layer comprises a conductive layer body and a first protrusion portion, and the first protrusion portion protrudes in a thickness direction of the conductive layer and is embedded in the binding layer.

2. The composite current collector according to claim 1, wherein a plurality of first protrusion portions is provided, and the plurality of first protrusion portions is disposed at intervals.

3. The composite current collector according to claim 1 or 2, wherein a protrusion height of the first protrusion portion is less than a thickness of the binding layer.

4. The composite current collector according to any one of claims 1 to 3, wherein the first protrusion portion comprises a first sub-protrusion portion and/or a second sub-protrusion portion, a shape of an orthographic projection of the first sub-protrusion portion on a surface of the conductive layer comprises a hole shape, and a shape of an orthographic projection of the second sub-protrusion portion on the surface of the conductive layer comprises a stripe shape.

5. The composite current collector according to claim 4, wherein at least one of the following conditions is satisfied:

(1) the hole shape comprises one or more of a circular hole, an elliptic hole, a sectoral hole, an arch-shaped hole, and a polygonal hole; and
(2) the stripe shape comprises one or more of an elliptic stripe, a polygonal stripe, an arc-shaped stripe, and a wavy stripe.

6. The composite current collector according to claim 4 or 5, wherein an angle comprised in the shape of the orthographic projection of the first sub-protrusion portion on the surface of the conductive layer and a supplementary angle of the angle $\geq 45°$.

7. The composite current collector according to any one of claims 4 to 6, wherein the first sub-protrusion portion satisfies at least one of the following conditions:

(1) a protrusion height h1 of the first sub-protrusion portion ranges from 15% to 85% of the thickness of the binding layer;
(2) the width d1 of the first sub-protrusion portion ranges from 5 mm to 50 mm; and
(3) the spacing $\Delta x1$ between two adjacent first sub-protrusion portions ranges from 10 mm to 100 mm.

8. The composite current collector according to any one of claims 4 to 7, wherein the stripe shape comprises alternating stripes or intersecting stripes.

9. The composite current collector according to claim 8, wherein the intersecting stripes comprise at least one intersecting portion.

10. The composite current collector according to claim 9, wherein the intersecting portion satisfies at least one of the following conditions:

(1) a shape of an orthographic projection of the intersecting portion on the surface of the conductive layer comprises one or more of a circle, an ellipse, and a polygon; and
(2) an angle comprised in the shape of the orthographic projection of the intersecting portion on the surface of the conductive layer and a supplementary angle of the angle $\geq 45°$.

11. The composite current collector according to any one of claims 4 to 10, wherein the second sub-protrusion portion satisfies at least one of the following conditions:

(1) a protrusion height h2 of the second sub-protrusion portion ranges from 15% to 85% of the thickness of the binding layer;
(2) a width d2 of the second sub-protrusion portion ranges from 5 mm to 40 mm; and
(3) a spacing $\Delta x2$ between two adjacent second sub-protrusion portions ranges from 20 mm to 150 mm.

12. The composite current collector according to any one of claims 1 to 11, wherein a total area S1 of the orthographic projection of the first protrusion portion on the surface of the conductive layer and an area S of the surface of the conductive layer satisfy: $1\% \leq S1/S \leq 50\%$.

13. The composite current collector according to any one of claims 1 to 12, wherein the binding layer comprises a binding layer body and a second protrusion portion, and the second protrusion portion protrudes in a thickness direction of the binding layer and is embedded in the conductive layer.

14. The composite current collector according to claim 13, wherein a protrusion height of the second protrusion portion is equal to a thickness of the conductive layer.

15. The composite current collector according to claim 13 or 14, wherein a plurality of second protrusion portions is

provided, and the plurality of second protrusion portions is disposed at intervals.

16. The composite current collector according to claim 15, wherein a spacing $\Delta x3$ between two adjacent second protrusion portions ranges from 5 mm to 100 mm.

17. The composite current collector according to any one of claims 13 to 16, wherein at least one of the following conditions is satisfied:

(1) the second protrusion portions and the first protrusion portions are disposed at intervals; and
(2) at least one first protrusion portion is disposed between two adjacent second protrusion portions.

18. The composite current collector according to any one of claims 13 to 17, wherein a total area S2 of an orthographic projection of the second protrusion portion on the surface of the conductive layer and a total area S1 of an orthographic projection of the first protrusion portion on the surface of the conductive layer satisfy: $S2<S1$.

19. The composite current collector according to any one of claims 13 to 18, wherein a width d3 of the second protrusion portion ranges from 50 μm to 500 μm.

20. The composite current collector according to any one of claims 13 to 19, wherein at least one of the following conditions is satisfied:

(1) a shape of the orthographic projection of the second protrusion portion on the surface of the conductive layer comprises one or more of a circular hole, an elliptic hole, a sectoral hole, an arch-shaped hole, and a polygonal hole; and
(2) an angle comprised in the shape of the orthographic projection of the second protrusion portion on the surface of the conductive layer ≥ 45°.

21. The composite current collector according to any one of claims 13 to 20, wherein a total area S2 of the orthographic projection of the second protrusion portion on the surface of the conductive layer and an area S of the surface of the conductive layer satisfy: $0.001\% \leq S2/S \leq 0.8\%$.

22. The composite current collector according to any one of claims 13 to 21, wherein the second protrusion portion comprises a binder.

23. The composite current collector according to claim 22, wherein the binder comprises one or more of a composition of isocyanate containing a multifunctional group and a polyester polyol compound, polyurethane, an epoxy resin, polyacrylate, poly(vinyl acetate), unsaturated polyester, a phenolic resin, a urea-formaldehyde resin, a modified polyolefin resin, modified polyethylene, modified polypropylene, modified polyolefin, a silicone resin, an ethylene-acrylic acid copolymer, an ethylene-vinyl acetate copolymer, an ethylene-vinyl alcohol copolymer, an acrylate resin, polycarbonate, and polyamide.

24. The composite current collector according to any one of claims 13 to 23, wherein at least one of the following conditions is satisfied:

(1) a thickness of the binding layer body ranges from 0.5 μm to 3 μm; and
(2) a binding force of the conductive layer ≥ 230 N/m.

25. The composite current collector according to any one of claims 1 to 24, wherein at least one of the following conditions is satisfied:

(1) a thickness of the conductive layer body ranges from 0.5 μm to 5 μm; and
(2) a thickness of the support layer ranges from 2 μm to 15 μm.

26. The composite current collector according to any one of claims 1 to 25, wherein at least one of the following conditions is satisfied:

(1) the support layer comprises one or more of polyamide, polyimide, polyethylene terephthalate, polybutylene terephthalate, polyethylene naphthalate, polycarbonate, polyethylene, polypropylene, poly(propyl vinyl), an

acrylonitrile-butadiene-styrene copolymer, vinyl alcohol, polystyrene, polyvinyl chloride, polyvinylidene difluoride, polytetrafluoroethylene, sodium polystyrene sulfonate, polyacetylene, silicone rubber, polyformaldehyde, polyphenylene ether, polyphenylene sulfide, polyethylene glycol, a poly(sulfur nitride) polymer material, polyphenyl, polypyrrole, polyaniline, polythiophene, polypyridine, cellulose, starch, protein, an epoxy resin, a phenolic resin, a derivative thereof, a cross-linked substance thereof, and a copolymer thereof;
(2) the binding layer comprises one or more of a composition of isocyanate containing a multifunctional group and a polyester polyol compound, polyurethane, an epoxy resin, polyacrylate, poly(vinyl acetate), unsaturated polyester, a phenolic resin, a urea-formaldehyde resin, a modified polyolefin resin, modified polyethylene, modified polypropylene, modified polyolefin, a silicone resin, an ethylene-acrylic acid copolymer, an ethylene-vinyl acetate copolymer, an ethylene-vinyl alcohol copolymer, an acrylate resin, polycarbonate, and polyamide; and
(3) the conductive layer comprises one or more of copper, aluminum, nickel, titanium, platinum, iron, cobalt, chrome, tungsten, molybdenum, magnesium, lead, indium, and tin.

**27.** An electrode plate, comprising the composite current collector according to any one of claims 1 to 26.

**28.** A secondary battery, comprising the electrode plate according to claim 27.

**29.** A power consuming apparatus, comprising the secondary battery according to claim 28.

131
132
12
11
13

FIG. 1

131
h1
Δx1
1321
12
11
13

FIG. 2

131
h2
Δx2
1322
12
11
13

FIG. 3

d1
132
1321

FIG. 4

d1
132
1321

FIG. 5

1322
132
d2

FIG. 6

1322
132
122
131
121
132
11
12
13
Δx3
122
131
121
132
11
12
13
5

FIG. 7

FIG. 8

FIG. 9

FIG. 10

5

53
52
52
51

FIG. 11

4
5
5
5

FIG. 12

1

FIG. 13

1
2
4
4
4
4
4
4
3

FIG. 14

6

FIG. 15

## INTERNATIONAL SEARCH REPORT

International application No.
**PCT/CN2024/092434**

**A. CLASSIFICATION OF SUBJECT MATTER**

H01M4/66(2006.01)i; H01M10/00(2006.01)i

According to International Patent Classification (IPC) or to both national classification and IPC

**B. FIELDS SEARCHED**

Minimum documentation searched (classification system followed by classification symbols)

H01M4/-; H01M10/-

Documentation searched other than minimum documentation to the extent that such documents are included in the fields searched

Electronic data base consulted during the international search (name of data base and, where practicable, search terms used)

CNTXT, ENTXTC, DWPI: 凹, 槽, 插, 导电层, 集流体, 卯, 嵌, 凸, 突, 粘, 粘合, 粘接, 粘结, 支撑层, 榫, bonding current collector, conductive, layer+

**C. DOCUMENTS CONSIDERED TO BE RELEVANT**

| Category* | Citation of document, with indication, where appropriate, of the relevant passages | Relevant to claim No. |
|---|---|---|
| X | CN 218939730 U (FLEXTOUCH TECHNOLOGIES CO., LTD.) 28 April 2023 (2023-04-28) description, paragraphs 10-11, 15, 17, 19, 21, and 25-26, and figure 1 | 1-29 |
| X | CN 113036155 A (HUIZHOU LIWEI ELECTRONIC TECHNOLOGY CO., LTD.) 25 June 2021 (2021-06-25) description, paragraphs 39, 48, 59, and 61, and figure 3 | 1-2, 27-28 |
| A | CN 114616699 A (NINGDE AMPEREX TECHNOLOGY LTD.) 10 June 2022 (2022-06-10) description, embodiment 1 | 1-29 |
| A | CN 115810759 A (CONTEMPORARY AMPEREX TECHNOLOGY CO., LTD.) 17 March 2023 (2023-03-17) description, embodiment 1 | 1-29 |
| A | CN 219163433 U (JIANGYIN SUDA HUICHENG COMPOSITE MATERIAL CO., LTD.) 09 June 2023 (2023-06-09) description, embodiment 1 | 1-29 |
| A | US 11784312 B1 (CONTEMPORARY AMPEREX TECHNOLOGY CO., LTD.) 10 October 2023 (2023-10-10) description, embodiment 1 | 1-29 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 July 2024** | **06 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/092434**

| Patent document cited in search report | Publication date (day/month/year) | Patent family member(s) | Publication date (day/month/year) |
|---|---|---|---|
| CN 218939730 U | 28 April 2023 | None | |
| CN 113036155 A | 25 June 2021 | None | |
| CN 114616699 A | 10 June 2022 | None | |
| CN 115810759 A | 17 March 2023 | None | |
| CN 219163433 U | 09 June 2023 | None | |
| US 11784312 B1 | 10 October 2023 | WO 2023082036 A1 | 19 May 2023 |
| | | EP 4203112 A1 | 28 June 2023 |
| | | EP 4203112 A4 | 15 November 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311621386